# EUROPEAN PATENT SPECIFICATION

(11) **EP 0 773 410 B1**
(45) Date of publication and mention of the grant of the patent: **18.08.2004**
(21) Application number: 96308199.7
(22) Date of filing: 13.11.1996
(51) Int. Cl.: F23R 3/36, F23R 3/28

(54) **Fuel and air mixing tubes**
Kraftstoff-Luft Mischrohr
Tube de mélange carburant/comburant

(30) Priority: 13.11.1995 US 556316
(43) Date of publication of application: 14.05.1997
(73) Proprietor: UNITED TECHNOLOGIES CORPORATION, Hartford, CT 06101 (US)
(72) Inventor: Evans, Tyler T., Palm Beach Gardens, Florida 33410 (US); Carroll, Robert G., West Palm Beach, Florida 33407 (US)
(74) Representative: Leckey, David Herbert

(56) References cited:
- US-A- 4 226 083
- US-A- 4 566 268
- US-A- 5 351 477
- US-A- 5 408 825

## Description

This invention relates to combustors for gas turbine engines and, more particularly, to combustors operating on either liquid fuel or gaseous fuel with low nitrous oxide emissions, and to fuel and air mixing tubes for such combustors, e.g. as disclosed in US 5351477A.

As a byproduct of combustion, gas turbine engines typically emit nitrous oxides (NOₓ) that are harmful to the atmosphere. Formation of nitrous oxides during the combustion process generally results from a reaction between fuel and air at high temperatures. The level of nitrous oxide emissions can be reduced by controlling the temperature during the combustion process. A known approach to control the combustion temperatures and therefore to minimize the nitrous oxide emissions is to ensure complete combustion of the fuel and to achieve uniform mixing of fuel and air.

U.S. Patents Nos. 4,222,232 to Robinson, 4,226,083 to Lewis et al, and 4,215,535 to Lewis teach an effective method and apparatus for reducing nitrous oxide emissions from gas turbine engines that operate on liquid fuel by ensuring complete combustion of the fuel and by achieving uniform mixing of fuel and air. The configuration described in the above-mentioned patents is very sensitive to any variations therein. It is the precise system described in those patents that results in low nitrous oxide emissions. However, with fluctuating fuel prices, it is desirable for many customers with power generation needs to have the choice of operating gas turbine engines on either liquid fuel or gaseous fuel. Although a number of dual fuel nozzles are commercially available, none yield low nitrous oxide emissions with the configuration described in the U.S. patents mentioned above. Also, gas turbine engines operating on gaseous fuel must compensate for the variations in natural gas fuel temperature and pressure that are site specific. Most of the existing dual fuel nozzles cannot be adjusted easily to accommodate for variations in gaseous fuel while producing low nitrous oxide emissions. Thus, there is a great need in the industry to offer power generation customers a choice to operate on either liquid fuel or gaseous fuel while maintaining an acceptably low level of nitrous oxide emissions.

According to the present invention there is provided a fuel and air mixing tube for a gas turbine engine combustor, as claimed in claim 1.

It will also be appreciated that the invention extends to a combustor including such a fuel and air mixing tube.

Thus it will be seen that in broad terms the invention provides a mixing tube having a liquid fuel injector mounted centrally at one end thereof, and a manifold arranged around that end of the tube with a plurality of holes extending through the tube wall from the manifold, for injecting gaseous fuel into the tube.

According to the preferred embodiments of the present invention, a gaseous fuel injection capability is implemented on an existing combustion system that yields low nitrous oxide emissions. An annular, external manifold is fixedly mounted at an upstream end of each of a plurality of mixing tubes so that gaseous fuel is supplied to the manifold and then injected into each of the plurality of mixing tubes through a plurality of gas orifices with sufficient momentum to be uniformly distributed across the flow path of the mixing tube. The orifices are formed within the mixing tube in a substantially perpendicular relationship to the mixing tube wall so that the maximum penetration for a given momentum is generated. The injected gaseous fuel is uniformly distributed across the flow path and is thoroughly mixed at the downstream end of each mixing tube as the fuel/air mixture enters the combustor. The optimum fuel/air ratio for low nitrous oxide emissions is approximately fifty to seventy five percent (50-75%) of the stoichiometric ratio for the primary mixing tubes and for the secondary mixing tube for each gaseous fuel and liquid fuel.

A preferred embodiment of the present invention will now be described, by way of example only, with reference to the accompanying drawings, in which:
Figure 1 is a simplified external perspective view of a combustor with a secondary mixing tube and a plurality of primary mixing tubes;
Figure 2 is a simplified, partially broken-away, cross-section view of the combustor of Fig. 1 as installed in an engine;
Figure 3 is a front view of the combustor illustrated in Fig. 1;
Figure 4 is a simplified cross-section view of a venturi premixer of the secondary mixing tube of Fig. 1; and
Figure 5 is a cross-section view taken through the combustor in the direction 5-5 as shown in Fig. 2.

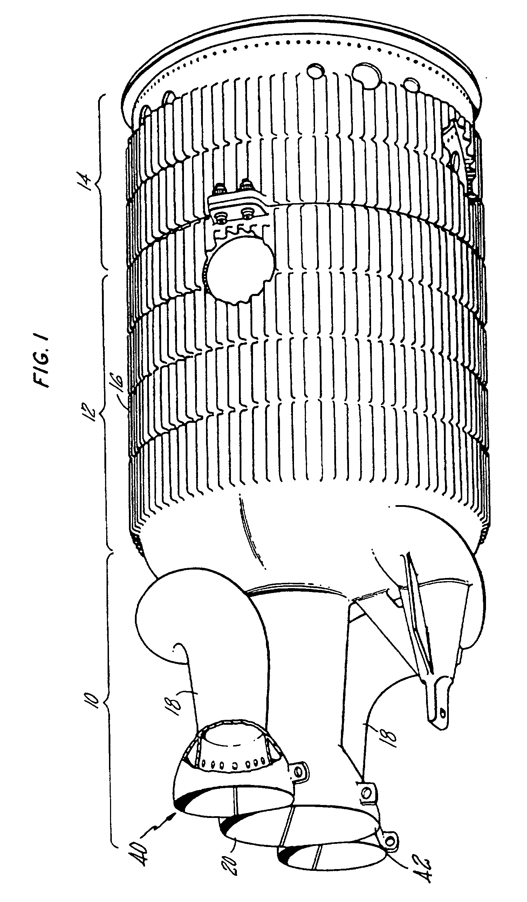

Referring to Fig. 1, a can-type combustion chamber, or combustor, is of the same type as described in U.S. Patents 4,226,083 to Lewis et al, 4,215,535 to Lewis, and 4,222,232 to Robinson. The combustor includes a fuel/air mixing zone 10, a combustion zone 12, and a dilution zone 14. The combustion zone 12 is formed by a cylindrical body 16. The fuel/air mixing zone 10 includes at least one primary, or pilot mixing tube 18 and a single secondary, or main mixing tube 20. Each of the primary mixing tubes 18 has a serpentine geometry. The secondary mixing tube 20 is axially oriented with respect to the combustion chamber and is positioned near, but not necessarily coincident with, the axis of the combustion chamber.

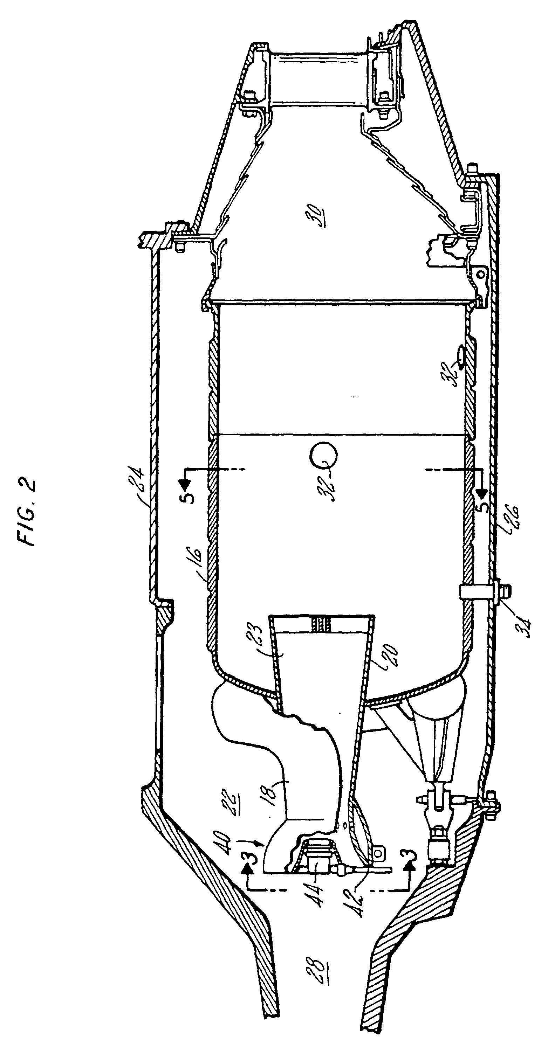

Although a single combustor is shown, it is anticipated that a plurality of combustors will be employed in each engine. Referring to Fig. 2, the combustors are circumferentially spaced about the engine in an annulus 22 between an inner engine case 24 and an outer engine case 26. A diffuser 28 leads axially into the annulus 22 from a compression section (not shown). Each combustor discharges through a transition duct 30 to a turbine section (not shown). Dilution air is flowable into the dilution zone of the combustor through the dilution holes 32. An ignitor 34 penetrates the combustor in the region of discharge of the fuel/air mixture from the primary tubes 18.

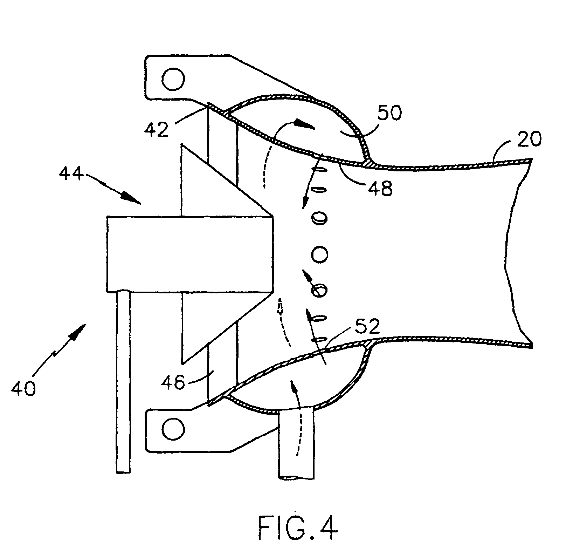

Referring to Figs. 2-4, each primary tube 18 and the secondary tube 20 include a venturi fuel/air premixer 40 at an upstream end 42 thereof. An airblast liquid fuel nozzle 44 is centrally mounted within each venturi premixer 40. The secondary tube 20 also includes a plurality of inlet swirl vanes 46 that are mounted radially outward of the air blast liquid nozzle 44 and radially inward of a venturi premixer wall 48 of the venturi premixer 40, as can be seen in Fig. 4. An annular, extemal gaseous fuel manifold 50 is disposed radially outward from the venturi premixer wall 48 of each primary tube 18 and of the secondary tube 20. A plurality of gas orifices 52 are formed within the venturi premixer wall 48 of each tube 18, 20. The gas orifices 52 are formed in a substantially perpendicular relationship to the venturi premixer wall 48 and are equally spaced from each other in the circumferential direction. Although it is desirable to locate the gas orifices as far upstream as possible for optimum mixing, the orifices must be disposed sufficiently downstream so they do not impinge on the inlet swirl vanes 46 of the secondary tube 20. The shape of the gas orifices 52 is shown to be circular. However, other shapes such as slots or slits are acceptable.

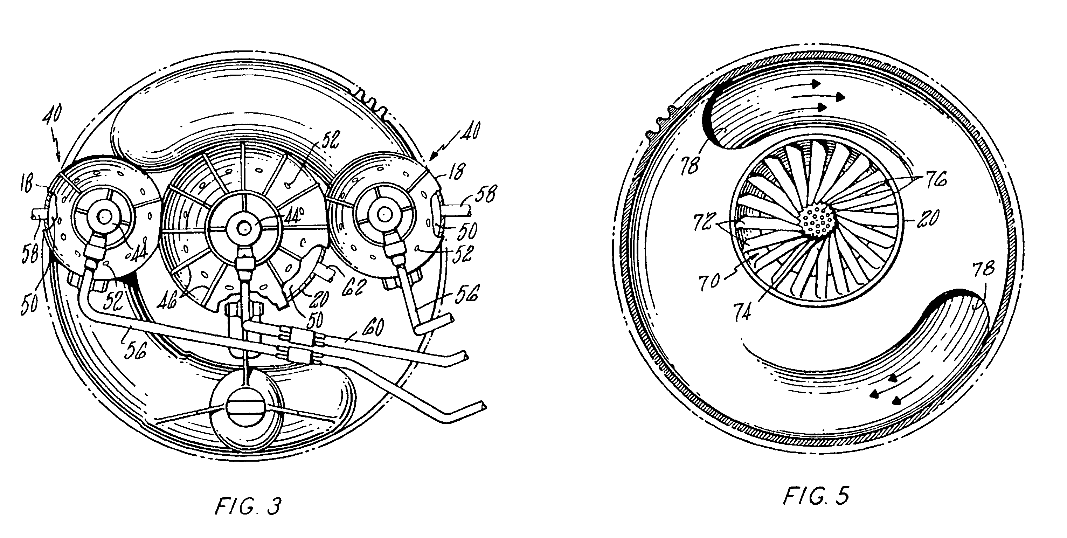

Referring to Fig. 3, liquid fuel supply means 56 supply liquid fuel to the airblast liquid fuel nozzle 44 of each primary tube 18. A gaseous fuel supply means 58 supply gaseous fuel to the manifold 50 of each of the primary tube 18. A liquid fuel supply means 60 and gaseous fuel supply means 62 supply liquid and gaseous fuel, respectively, to the airblast liquid fuel nozzle 44 and the manifold 50 of the secondary tube 20, respectively. The primary liquid fuel supply means 56 and the secondary liquid fuel supply means 60 are independently operable so as to enable staging of the liquid fuel flow to the combustor. The primary gaseous fuel supply means 58 and the secondary gaseous fuel supply means 62 are independently operable so as to enable staging of the gaseous fuel flow to the combustor.

Each of the primary tubes 18 is adapted to discharge the gases flowing therethrough circumferentially into the radially outward portion of the combustion zone of the combustor. The secondary tube 20 is adapted to discharge the gases flowing therethrough into the central portion of the combustion zone. Refemng to Fig. 5, the downstream end of the secondary tube 20 has an exit swirler 70 disposed thereacross. The swirler 70 is comprised of a plurality of exit vanes 72 for imparting a circumferential swirl to the medium gases flowing through the secondary mixing tube 20. A central plug 74 having a plurality of holes 76 disposed therein is positioned at the center of the mixing tube 20. Each of the primary or pilot mixing tubes 18 (not shown) discharges into the combustion chamber through a corresponding aperture 78. Flow discharged through the apertures 78 of the primary mixing tubes 18 is caused to swirt circumferentially about the chamber in a direction opposite to that at which the gases are discharged from the secondary mixing tube 20.

During operation of the combustor on liquid fuel, the operation of the combustor remains substantially the same as was described in the above-mentioned U.S. patents. Thus, the phenomena described therein remains unaffected by the addition of the gaseous fuel capability.

During operation of the combustor on gaseous fuel, gaseous fuel is flowed through the gaseous fuel supply means 58 to the respective manifolds 50 of the primary tubes 18. The gaseous fuel is radially injected into the flow path through the gas orifices 52 with sufficient momentum to be distributed across the flow path of the primary mixing tubes 18. The combustor air enters the venturi premixer 40 substantially perpendicular to the gas jets so that the gas obtains maximum penetration for a given momentum. The gaseous fuel mixes with air in the primary tubes 18 in a ratio which is within the range of approximately fifty to seventy-five percent (50-75%) of the stoichiometric ratio for the gaseous fuel employed.

The fuel/air mixture is subsequently discharged into the combustion zone 12 of the chamber through the apertures 78. The serpentine geometry of the primary tubes 18 increases the mixing time of the fuel and air mixture while the tangential discharge imparts a circumferential swirl to the fuel/air; mixture discharged therefrom. This swirling mixture is ignited in the combustion zone by the ignitor 34.

As the power level of the engine is increased, additional gaseous fuel is flowed through the supply means 62 to the manifolds 50 of the secondary tube 20. The gaseous fuel is radially injected into the flow path through the gas onfices 52 with sufficient momentum to be distributed across the flow path of the secondary mixing tubes 20. The combustor air enters the ventun premixer 40 substantially perpendicular to the gas jets so that the gas obtains maximum penetration for a given momentum. The gaseous fuel in the secondary tube 20 mixes with air flowing therethrough at a ratio which is approximately fifty to seventy-five percent (50 - 75%) of the stoichiometric ratio for the gaseous fuel employed. The fuel/air mixture is subsequently directed across the exit swirl vanes 72. The vanes impart a circumferential swirl to the mixture and in combination with the swirling fuel/air mixture from the primary tubes 18 cause a strong centrifugal force field to develop within the combustion zone.

Igniting and burning the primary fuel/air mixture substantially reduces the density of the gases in the radially outward portion of the combustion zone. Accordingly, the fuel/air mixture from the secondary tube is centrifuged outwardly into these hot, less dense gases. The hot gases raise the temperature of the secondary fuel/air mixture above the auto ignition point causing ignition of the secondary mixture. The forced mixing of the secondary fuel/air mixture into the combusting, primary, fuel/air mixture causes very rapid burning of the available fuel. Consequently, the time exposure of nitrogen and oxygen bearing gases to the high combustion temperature may be curtailed after short duration by the injection of temperature modifying dilution air through the holes 32.

It is the approach of the present invention that the combustor be operated at a lean fuel/air ratio for liquid fuel as well as for the gaseous fuel, that is in an oxygen rich environment in which the combustion temperature is substantially below the stoichiometric temperature. A fuel/air ratio not exceeding seventy-five percent (75%) of stoichiometric values adequately limits the production of nitrous oxides. Collaterally, excess oxygen assures complete combustion of the fuel and resultant low carbon monoxide emissions.

To maintain low fuel/air ratios, staged combustion is employed. Throughout the operating range of the engine, the fuel/air ratios in both the primary tubes and the secondary tubes are closely controlled.

It will be appreciated from the above description that the primary advantage of the described embodiment is that a gas turbine engine can operate on either liquid fuel or gaseous fuel while maintaining low nitrous oxide emissions since the addition of the gaseous fuel capability does not interfere with the liquid fuel flow path and does not adversely affect the nitrous oxide emission while the gas turbine engine operates on liquid fuel.

Another advantage of the present invention is that the configuration for gaseous fuel injection can be modified easily to compensate for differences in operating conditions of customers. Natural gas at each different customer site has different temperature and pressure. To compensate for these variations in natural gas, each gas turbine engine must be customized to a specific site. The invention allows for easy modification by changing the size of orifices.

Although the invention has been shown and described with respect to a preferred embodiment, it should be understood by those skilled in the art that various changes and omissions in the form and detail thereof may be made therein without departing from the scope of the invention as defined in the appendant claims. For example, the inclusion of the manifold is not as critical for the primary tubes as it is for the secondary tubes. The serpentine shape of the primary tubes promotes mixing of air and fuel, thereby resulting in a substantially uniform fuel/air mixture at the downstream end of the primary tubes. The secondary tube, however, does require an airblast nozzle for liquid fuel and the manifold for gaseous fuel.

## Claims

1. A fuel and air mixing tube (18,20) for a gas turbine engine combustor, said mixing tube having an upstream end (42) and a downstream end, said mixing tube (18,20) discharging fuel into said combustor through said downstream end thereof, said mixing tube comprising:
an airblast liquid fuel injector (44) centrally mounted at said upstream end (42) of said mixing tube for injecting liquid fuel into said mixing tube (18,20); and
a manifold (50) disposed radially outward from a mixing tube wall (48) at said upstream end of said fuel and air mixing tube (18,20), said manifold having a plurality of orifices (52) formed within said mixing tube wall (48) for injecting gaseous fuel into said mixing tube (18,20); said fuel and air mixing tube being **characterised in that**:
said airblast liquid fuel injector injects liquid fuel along the central axis of said mixing tube;
all of said gaseous fuel is injected downstream of said airblast liquid fuel injector; and
said plurality of orifices are formed perpendicular to said mixing tube wall.

2. A combustor including at least one fuel and air mixing tube as claimed in claim 1.

3. A combustor having a combustion zone (12) including a central portion and a radially outward portion, and having a fuel/air mixing zone (10) upstream of the combustion zone (12), said combustor having a plurality of primary fuel/air mixing tubes (18) oriented to discharge a mixture of fuel and air circumferentially into said radially outward portion of the combustor, said combustor having a secondary fuel/air mixing tube (20) having means (72) for swirling a fuel/air mixture circumferentially into said central portion of the combustor, said combustor having means (32) for igniting the primary fuel/air mixture so that in use swirling, secondary fuel/air mixture is centrifuged outwardly into the burning primary fuel/air mixture,
wherein said secondary fuel/air mixing tube (20) comprises a fuel and air mixing tube (18,20) as claimed in claim 1.

4. A combustor as claimed in claim 3, wherein said primary (18) and secondary (20) fuel/air mixing tubes each comprise a mixing tube (18,20) as claimed in claim 1.

5. A combustor as claimed in claim 3 or 4 wherein said radially outward portion is encased by a cylindrical body, said fuel and air mixing zone (10) is located upstream of said radially'outward portion and wherein said main fuel and air mixing tube (20) is surrounded by said plurality of pilot fuel and air mixing tubes (18).

## Patentansprüche

1. Brennstoff-und-Luft-Mischrohr (18, 20) für eine Gasturbinenmaschinen-Brennereinrichtung, wobei das Mischrohr ein strömungsaufwärtiges Ende (42) und ein strömungsabwärtiges Ende hat, wobei das Mischrohr (18, 20) Brennstoff in die Brennereinrichtung durch deren strömungsabwärtiges Ende abgibt, wobei das Mischrohr aufweist:
einen Flüssigbrennstoff-Druckluftinjektor (44), der zentral an dem strömungsaufwärtigen Ende (42) des Mischrohrs zum Injizieren von flüssigem Brennstoff in das Mischrohr (18, 20) angeordnet ist; und
eine Verzweigungseinrichtung (50), die radial außerhalb von einer Mischrohrwand (48) an dem strömungsaufwärtigen Ende des Brennstoffund-Luft-Mischrohrs (18, 10) angeordnet ist, wobei die Verzweigungseinrichtung eine Mehrzahl von Öffnungen (52) aufweist, die in der Mischrohrwand (48) zum Injizieren von gasförmigem Brennstoff in das Mischrohr (18, 20) gebildet sind, wobei das Brennstoff-und-Luft-Mischrohr **dadurch gekennzeichnet ist, dass**
der Flüssigbrennstoff-Druckluftinjektor flüssigen Brennstoff entlang der Zentralachsen des Mischrohrs injiziert;
der gesamte gasförmige Brennstoff strömungsabwärts von dem Flüssigbrennstoff-Druckluftinjektor injiziert wird; und
die Mehrzahl von Öffnungen rechtwinklig zu der Mischrohrwand gebildet ist.

2. Brennereinrichtung aufweisend mindestens ein Brennstoff-und-Luft-Mischrohr nach Anspruch 1.

3. Brennereinrichtung mit einer Verbrennungszone (1) aufweisend einen zentralen Bereich und einen radial äußeren Bereich und mit einer Brennstoff/Luft-Mischzone (10) strömungsaufwärts von der Verbrennungszone (12), wobei die Brennereinrichtung eine Mehrzahl von primären Brennstoff/Luft-Mischrohren (18) hat, die ausgerichtet sind, dass sie eine Mischung aus Brennstoff und Luft umfangsmäßig in den radial äußeren Bereich der Brennereinrichtung abgeben, wobei die Brennereinrichtung ein sekundäres Brennstoff/Luft-Mischrohr (20) mit Mitteln (72) zum Verwirbeln einer Brennstoff/Luftmischung umfangsmäßig in den Zentralbereich der Brennereinrichtung hat, wobei die Brennereinrichtung Mittel (32) zum Entzünden der primären Brennstoff/Luftmischung hat, so dass bei Betrieb die wirbelnde sekundäre Brennstoff/Luftmischung nach außen in die brennende primäre Brennstoff/Luftmischung zentrifugiert wird,
wobei das sekundäre Brennstoff/Luft-Mischrohr (20) ein Brennstoff-und-Luft―Mischrohr (18, 20) nach Anspruch 1 aufweist.

4. Brennereinrichtung nach Anspruch 3, wobei das primäre (18) und das sekundäre (20) Brennstoff/Luft-Mischrohr jeweils ein Mischrohr (18, 20) nach Anspruch 1 aufweisen.

5. Brennereinrichtung nach Anspruch 3 oder 4, wobei der radial äußere Bereich von einem zylinderförmigen Körper eingeschlossen ist, wobei die Brennstoff-und-Luft-Mischzone (10) strömungsaufwärts von dem radial äußeren Bereich angeordnet ist und wobei das Haupt-Brennstoff-und-Luft-Mischrohr (20) von der Mehrzahl von Pilot-Brennstoff-und-Luft-Rohren (18) umgeben ist.

## Revendications

1. Tube de mélange de carburant et air (18, 20) pour une chambre de combustion de turbine à gaz, ledit tube de mélange ayant une extrémité en amont (42) et une extrémité en aval, ledit tube de mélange (18, 20) déchargeant du carburant dans ladite chambre de combustion à travers ladite extrémité en aval de celle-ci, ledit tube de mélange comprenant :
un injecteur de carburant liquide à air sous pression (44) monté de façon centrale au niveau de ladite extrémité en amont (42) dudit tube de mélange pour injecter du carburant liquide dans ledit tube de mélange (18, 20) ; et
un collecteur (50) disposé vers l'extérieur de façon radiale à partir d'une paroi de tube de mélange (48) au niveau de ladite extrémité en amont dudit tube de mélange de carburant et air (18, 20), ledit collecteur ayant une pluralité d'orifices (52) formés à l'intérieur de ladite paroi de tube de mélange (48) pour injecter du carburant gazeux dans ledit tube de mélange (18, 20) ; ledit tube de mélange de carburant et air étant **caractérisé en ce que** :
ledit injecteur de carburant liquide à air sous pression injecte du carburant liquide le long de l'axe central dudit tube de mélange ;
tout ledit carburant gazeux est injecté en aval dudit injecteur de carburant liquide à air sous pression ; et
ladite pluralité d'orifices sont réalisés perpendiculaires à ladite paroi de tube de mélange.

2. Chambre de combustion comprenant au moins un tube de mélange de carburant et air selon la revendication 1.

3. Chambre de combustion ayant une zone de combustion (12) comprenant une partie centrale et une partie extérieure de façon radiale, et ayant une zone de mélange de carburant/air (10) en amont de la zone de combustion (12), ladite chambre de combustion ayant une pluralité de tubes de mélange de carburant/air primaires (18) orientés pour décharger un mélange de carburant et air de façon circonférentielle dans ladite partie extérieure de façon radiale de ladite chambre de combustion, ladite chambre de combustion ayant un tube de mélange de carburant/air secondaire (20) ayant des moyens (72) pour faire tourbillonner un mélange carburant/ air de façon circonférentielle dans ladite partie centrale de la chambre de combustion, ladite chambre de combustion ayant des moyens (32) pour allumer le mélange carburant/ air primaire de sorte qu'en utilisant le tourbillonnement, le mélange carburant/ air secondaire est centrifugé vers l'extérieur dans le mélange carburant/air primaire en combustion,
dans laquelle ledit tube de mélange de carburant/air secondaire (20) comprend un tube de mélange de carburant et air (18, 20) selon la revendication 1.

4. Chambre de combustion selon la revendication 3, dans laquelle lesdits tubes de mélange de carburant/air primaires (18) et secondaire (20) comprennent chacun un tube de mélange (18, 20) selon la revendication 1.

5. Chambre de combustion selon la revendication 3 ou 4, dans laquelle ladite partie extérieure de façon radiale est entourée par un corps cylindrique, ladite zone de mélange de carburant et air (10) est située en amont de ladite partie extérieure de façon radiale et dans laquelle ledit tube de mélange de carburant et air principal (20) est entouré par ladite pluralité de tubes de mélange de carburant et air pilotes (18).
